# EUROPÄISCHE PATENTANMELDUNG

(11) **EP 4 528 331 A1**
(43) Veröffentlichungstag der Anmeldung: **26.03.2025**
(21) Anmeldenummer: 23198331.3
(22) Anmeldetag: 19.09.2023
(51) Int. Cl.: G01S 17/931, E01C 19/00, E01C 19/48

(54) **KANTENERFASSUNGSSYSTEM UND VERFAHREN ZUM ERFASSEN EINER KANTE**

(71) Anmelder: Joseph Vögele AG, 67067 Ludwigshafen (DE)
(72) Erfinder: WEISER, Ralf, 68526 Ladenburg (DE); STUMPF, Philipp, 69115 Heidelberg (DE)
(74) Vertreter: Grünecker Patent- und Rechtsanwälte PartG mbB

(57) **Zusammenfassung**

Ein Kantenerfassungssystem (10) für einen Straßenfertiger, der einen Straßenbelag auf einen Untergrund (6) auftragen kann, wird offenbart, wobei das Kantenerfassungssystem (10) eine Sensoreinheit (11) umfasst, die Laserpulsfolgen (16) in eine Vielzahl von Richtungen (17) derart aussendet, dass die Laserpulsfolgen (16) an einer Vielzahl von Stellen (18) einer abzutastenden Oberfläche (19) reflektiert werden. Die Sensoreinheit (11) erfasst Reflexionen der Laserpulsfolgen (16) und erzeugt basierend auf den erfassten Reflexionen Polarkoordinatensignale, die Polarkoordinaten repräsentieren, wobei die Polarkoordinaten einen Abstand und einen zugehörigen Winkel umfassen. Das Kantenerfassungssystem (10) transformiert die Polarkoordinatensignale in kartesische Koordinatensignale, die kartesische Koordinaten repräsentieren, und bestimmt basierend auf den kartesischen Koordinatensignalen eine Position einer Kante (28) in der abzutastenden Oberfläche (19) relativ zu einem kartesischen Koordinatensystem (20). Eine Einbaubohle (3) des Straßenfertigers weist eine Grundbohle (12) auf, die Ausziehteile (13) umfasst. Basierend auf den kartesischen Koordinatensignalen wird eine interpolierende Funktion bestimmt, auf deren Basis eine geglättete Funktion bestimmt wird. Das Kantenerfassungssystem (10) und/oder die Sensoreinheit (11) kann das kleinste Minimum und/oder das größte Maximum einer Ableitungsfunktion der geglätteten Funktion bestimmen. Das kleinste Minimum der Ableitungsfunktion kann als Grundlage für die Bestimmung des Kantenabstandswert herangezogen werden. Für den Kantenabstandswert kann ein Sollwert eingestellt werden, um den ein Plausibilitätsfensters definiert wird. Es kann durch einen Bediener einstellbar sein, welche Art von Kante erfasst werden soll, bspw. ob eine nach außen abfallende oder ansteigende Kante erfasst werden soll.

## Beschreibung

Die Erfindung bezieht sich auf die Erfassung von Kanten als Referenz für das Einbauen von Straßenbelägen.

Straßenbeläge, wie z. B. Asphaltschichten werden häufig mit Hilfe von Straßenfertigern eingebaut. Um einen gewünschten Verlauf des Straßenbelags, insbesondere dessen seitlicher Ränder, zu gewährleisten, werden Referenzen herangezogen, an welchen der Straßenfertiger, insbesondere dessen Einbaubohle entlanggeführt werden kann. Zu diesen Referenzen gehören z. B. Drähte oder Kanten. Beispiele für als Referenz genutzte Kanten sind Bordsteinkanten, Kanten von bereits zuvor eingebauten Belagsschichten oder durch Abtragen von zu erneuernden Belagsschichten entstandene Fräskanten. Das Führen des Straßenfertigers bzw. der Bohle oder deren Ausziehteile entlang der Referenz wird häufig noch durch manuelle Steuerung durch Bedienpersonal erledigt. Eine weitere Automatisierung wird jedoch angestrebt. Eine anspruchsvolle Aufgabe ist es hierbei, den Verlauf der Referenz zu erfassen. Aus der WO 2020 088 782 A1 ist Sensorsystem für eine Baumaschine, insbesondere einen Straßenfertiger bekannt, das einen Laserscanner umfasst. Dadurch soll ein Nachführen durch Lenken des Straßenfertigers oder Aus- bzw. Einfahren von ausfahrbaren Bohlenteilen ermöglicht werden.

Es ist eine Aufgabe der Erfindung, ein verbessertes System oder Verfahren zur Kantenerfassung anzugeben. Diese Aufgabe wird gelöst durch ein Kantenerfassungssystem mit den Merkmalen des Anspruchs 1 sowie durch ein Verfahren mit den Merkmalen des Anspruchs 16. Vorteilhafte Weiterbildungen sind in den jeweiligen abhängigen Ansprüchen angegeben.

Es wird ein Kantenerfassungssystem für einen Straßenfertiger offenbart. Das Kantenerfassungssystem umfasst eine Sensoreinheit, die dazu konfiguriert ist, Laserpulsfolgen in eine Vielzahl von Richtungen derart auszusenden, dass die Laserpulsfolgen an einer Vielzahl von Stellen einer abzutastenden Oberfläche reflektiert werden. Die Sensoreinheit ist des Weiteren dazu konfiguriert, Reflexionen der Laserpulsfolgen zu erfassen und basierend auf den erfassten Reflexionen Polarkoordinatensignale zu erzeugen, die Polarkoordinaten repräsentieren, wobei die Polarkoordinaten einen Abstandswert und einen zugehörigen Winkelwert umfassen. Das Kantenerfassungssystem ist des Weiteren dazu konfiguriert, die Polarkoordinatensignale in kartesische Koordinatensignale, die kartesische Koordinaten repräsentieren, zu transformieren und basierend auf den kartesischen Koordinatensignalen eine Position einer Kante in der abzutastenden Oberfläche relativ zu einem kartesischen Koordinatensystem zu bestimmen. Die Transformation in kartesische Koordinatensignale können Verarbeitungsweisen ermöglicht werden, die, anders als Ansätze aus dem Stand der Technik, ohne eine Auswertung der Strahlungsintensität auskommen.

Die abzutastende Oberfläche kann bspw. ein Untergrund oder ein Abschnitt des Untergrunds sein, auf dem der Straßenfertiger fährt und/oder den Straßenbelag aufträgt. Das Kantenerfassungssystem kann zusätzlich zu der Sensoreinheit weitere Komponenten umfassen, bspw. eine Steuereinheit. Die Komponenten des Kantenerfassungssystems können untereinander verbunden sein, bspw. um Signale zu übertragen und/oder Daten auszutauschen. Z. B. können die Verbindungen zwischen den Komponenten des Kantenerfassungssystems eine oder mehrere Ethernet-Verbindungen und/oder eine oder mehrere CAN-Bus-Verbindungen umfassen. Das Kantenerfassungssystem kann mehrere Sensoreinheiten umfassen. Jede Sensorreinheit kann eine Adresse, bspw. eine IP-Adresse, aufweisen. Die Adresse kann statisch in die jeweilige Sensoreinheit einprogrammiert sein oder zugewiesen werde, bspw. durch die Sensoreinheit. Z. B. kann die Steuereinheit dazu konfiguriert sein, einer, mehreren oder allen der Sensoreinheiten eine Adresse basierend auf einem Anschluss zuzuweisen, durch welchen die jeweilige Sensoreinheit mit der Steuereinheit verbunden ist.

Die Steuereinheit kann dazu konfiguriert sein, verschiedene Funktionalitäten des Kantenerfassungssystems zu implementieren. Die Steuereinheit kann z. B. als separate elektronische Schaltung oder als Teil einer zentralen Steuervorrichtung der Einbaubohle oder des Straßenfertigers ausgeführt sein. Als Laserpulsfolgen können Lasersignale angesehen werden, die eine begrenzte Anzahl von Perioden, insbesondere eine oder mehrere Perioden, umfassen.

Im Folgenden wird der Begriff "Funktion" in einem allgemeinen, mathematischen Verständnis verwendet. Darunter kann bspw. eine Beziehung zwischen zwei Mengen verstanden werden, in der jedem Element der ersten Menge genau ein Element der zweiten Menge zugeordnet wird. Die Zuordnung kann z. B. durch eine mathematische Formel oder durch eine Vielzahl von, bspw. diskreten, geordneten Paaren, z. B. Koordinatenpaaren, gegeben sein. Ein geordnetes Paar kann jeweils ein Argument, z. B. eine erste Koordinate oder eine x-Koordinate, und einen Funktionswert, z. B. eine zweite Koordinate oder eine y-Koordinate oder eine Steigung, umfassen. Das Kantenerfassungssystem kann dazu konfiguriert sein, basierend auf den kartesischen Koordinatensignalen eine interpolierende Funktion zu bestimmen. Die interpolierende Funktion kann als Repräsentation des Konturenverlaufs der abzutastenden Oberfläche angesehen werden. Durch Kurvendiskussion kann können markante Stellen im Konturverlauf mathematisch bestimmt werden.

Das Kantenerfassungssystem kann dazu konfiguriert sein, basierend auf der interpolierenden Funktion und/oder basierend auf den kartesischen Koordinatensignalen eine geglättete Funktion zu bestimmen. Durch Glätten können bspw. Fehler bei der Auswertung vermieden werden, die bspw. durch Messwertrauschen der ungeglätteten Funktion entstehen würden. Die geglättete Funktion kann eine Vielzahl von geordneten Paaren umfassen. Bspw. können die geordneten Paare jeweils eine erste Koordinate oder eine x-Koordinate als Argument und eine zweite Koordinate oder eine y-Koordinate als Funktionswert umfassen.

Das Kantenerfassungssystem kann dazu konfiguriert sein, die geglättete Funktion zu differenzieren und eine Ableitungsfunktion zu bestimmen. Die Ableitungsfunktion kann eine Vielzahl von geordneten Paaren umfassen. Bspw. können die geordneten Paare jeweils eine erste Koordinate oder eine x-Koordinate als Argument und eine Steigung, z.B. eine Steigung der geglätteten Funktion an dem jeweiligen Argument oder der jeweiligen x-Koordinate, als Funktionswert umfassen. Da die Ableitungsfunktion den Verlauf der Steigung der geglätteten Funktion repräsentieren kann, kann durch Auswertung der Ableitungsfunktion bestimmt werden, wo sich Richtungswechsel im Konturenverlauf der abzutastenden Oberfläche befinden.

Das Kantenerfassungssystem kann dazu konfiguriert sein, das kleinste Minimum und/oder das größte Maximum der Ableitungsfunktion zu bestimmen. Dazu kann bspw. die Ableitungsfunktion ein weiteres Mal differenziert werden und die Nullstellen der so bestimmten zweiten Ableitungsfunktion bestimmt werden. Das Kantenerfassungssystem kann des Weiteren dazu konfiguriert sein, bei der Bestimmung des kleinsten Minimums und/oder des größten Maximums der Ableitungsfunktion Stellen unberücksichtigt zu lassen, an denen die Funktionswerte der Ableitungsfunktion kleiner als ein Schwellwert sind. Dadurch kann vermieden werden, dass bei der Abwesenheit eines eindeutigen Extremums kontinuierlich zufällig verteilte Werte ausgegeben werden.

Das Kantenerfassungssystem kann konfiguriert sein, basierend auf dem Argument der Ableitungsfunktion am kleinsten Minimum und/oder am größten Maximum einen Kantenabstandswert zu bestimmen, welcher einen Kantenabstand zwischen der Kante in der abzutastenden Oberfläche und der Sensoreinheit repräsentieren kann.

Des Weiteren kann die Sensoreinheit einen 2D-LiDAR Sensor umfassen. Die Sensoreinheit kann dazu konfiguriert sein Laserpulsfolgen im Infrarotspektrum auszusenden. Bspw. kann die Sensoreinheit dazu konfiguriert sein, infrarote Laserpulse auszusenden. Die Sensoreinheit kann des Weiteren eine Fotodiode umfassen. Die Fotodiode kann dazu konfiguriert sein, Reflexionen der Laserpulsfolgen, z. B. Reflexionen im Infrarotspektrum und/oder Reflexionen von infraroten Laserpulsen, zu erfassen. Die Sensoreinheit oder das Kantenerfassungssystem können dazu konfiguriert sein, basierend auf einer Laufzeitmessung den Abstandswert zu bestimmen.

Sämtliche Richtungen der Vielzahl von Richtungen können in einer Ebene liegen. Die Sensoreinheit kann bspw. einen rotierenden Spiegel umfassen. Der Spiegel kann dazu konfiguriert sein, die Laserpulsfolgen im Infrarotspektrum und/oder infrarote Laserpulse, in die Vielzahl von Richtungen abzulenken. Die Sensoreinheit oder das Kantenerfassungssystem können des Weiteren dazu konfiguriert sein, basierend einer Orientierung des Spiegels den Winkelwert zu bestimmen. Die Drehfrequenz des Spiegels kann z. B. zwischen 1 Hz und 100 Hz, insbesondere zwischen 1 Hz und 50 Hz, besonders bevorzugt zwischen 1 Hz und 30 Hz, betragen. Die Drehfrequenz des Spiegels kann bspw. 15 Hz betragen. Die Sensoreinheit und/oder das Kantenerfassungssystem können dazu konfiguriert sein, Messungen im Bereich zwischen -35° und 35° auszuwerten.

Das Kantenerfassungssystem kann des Weiteren eine zweite Sensoreinheit umfassen und dazu konfiguriert sein, die Sensoreinheit und die zweite Sensoreinheit anhand ihrer IP-Adressen zu unterscheiden Alternativ oder zusätzlich kann das Kantenerfassungssystem dazu konfiguriert sein, die Sensoreinheit und die zweite Sensoreinheit anhand ihrer Anbauposition, z. B. der Seite und/oder des Seitenschiebers der Einbaubohle, auf der bzw. an dem sie montiert sind, zu unterscheiden. Alternativ oder zusätzlich kann das Kantenerfassungssystem dazu konfiguriert sein, die Sensoreinheit und die zweite Sensoreinheit anhand von Anschlüssen zu unterscheiden, mit denen die jeweilige Sensoreinheit mit anderen Komponenten des Kantenerfassungssystems, bspw. einer Steuereinheit, verbunden ist.

Die Erfindung bezieht sich auch auf eine Einbaubohle für einen Straßenfertiger, umfassend ein Kantenerfassungssystem der vorstehend beschriebenen Art. Die Einbaubohle kann insbesondere mindestens ein Ausziehteil, vorzugsweise zwei Ausziehteile, umfassen. Der Kantenabstand parallel zu einer Ausziehrichtung des Ausziehteils definiert sein. Das Bewegen des Ausziehteils oder der Ausziehteile kann basierend auf einer Ausgabe des Kantenerfassungssystems steuerbar sein.

An einem, mehreren oder allen der an der Einbaubohle vorhandenen Ausziehteile kann jeweils eine Sensoreinheit vorgesehen sein. Insbesondere können an einem, mehreren oder allen der an der Einbaubohle vorhandenen Ausziehteile jeweils ein Seitenschieber angebracht sein. Die Sensoreinheit oder die Sensoreinheiten können jeweils an einem der Seitenschieber angeordnet sein. Die Sensoreinheit oder die Sensoreinheiten können jeweils derart an dem Ausziehteil oder dem Seitenschieber angeordnet sein, dass die Ebene in einem Winkel zu der abzutastenden Oberfläche orientiert ist der größer als 0° und kleiner als 180° ist, insbesondere 90° beträgt.

Die Einbaubohle kann eine Wegmessung und/oder eine Breitenregelung aufweisen. Die Wegmessung kann dazu konfiguriert sein, Ausfahrwege jedes der Ausziehteile zu bestimmen. Die Breitenregelung kann dazu konfiguriert sein eine vorgegebene Sollbreite durch Bewegen eines oder mehrerer oder aller Ausziehteile einzustellen.

Die Erfindung bezieht sich auch auf einen Straßenfertiger umfassend ein Kantenerfassungssystem der vorstehend beschriebenen Art oder eine Einbaubohle der vorstehend beschriebenen Art. Die Ebene und eine Fahrtrichtung des Straßenfertigers einen Winkel einschließen, der größer als 0° und/oder kleiner als 180° vorzugsweise größer als 75° und/oder kleiner als 105°, ist. Insbesondere kann die Ebene orthogonal zu einer Fahrtrichtung des Straßenfertigers orientiert sein.

Die Erfindung bezieht sich auch auf ein Verfahren zum Erfassen einer Kante durch ein Kantenerfassungssystem für einen Straßenfertiger, wobei das Kantenerfassungssystem eine Sensoreinheit umfasst. Das Verfahren umfasst Aussenden von Laserpulsfolgen in eine Vielzahl von Richtungen durch eine Sensoreinheit, sodass die Laserpulsfolgen an einer Vielzahl von Stellen einer abzutastenden Oberfläche reflektiert werden, Erfassen von Reflexionen der Laserpulsfolgen durch die Sensoreinheit und Erzeugen von Polarkoordinatensignalen, die Polarkoordinaten repräsentieren, basierend auf den erfassten Reflexionen, wobei die Polarkoordinaten einen Abstandswert und einen zugehörigen Winkelwert umfassen. Das Verfahren umfasst des Weiteren Transformieren der Polarkoordinatensignale in kartesische Koordinatensignale, die kartesische Koordinaten repräsentieren und Bestimmen einer Position einer Kante in der abzutastenden Oberfläche relativ zu einem kartesischen Koordinatensystem basierend auf den kartesischen Koordinatensignalen.

Die abzutastende Oberfläche kann bspw. ein Untergrund oder ein Abschnitt des Untergrunds sein, auf dem der Straßenfertiger fährt und/oder den Straßenbelag aufträgt.

Das Verfahren kann des Weiteren Bestimmen einer interpolierenden Funktion basierend auf den kartesischen Koordinatensignalen umfassen.

Das Verfahren kann des Weiteren Bestimmen einer geglätteten Funktion basierend auf der interpolierenden Funktion umfassen. Durch Glätten der Funktion können bspw. Fehler bei der Auswertung vermieden werden, die bspw. durch Messwertrauschen der ungeglätteten Funktion entstehen würden.

Das Verfahren kann des Weiteren ein Differenzieren der geglätteten Funktion und Bestimmen einer Ableitungsfunktion umfassen. Da die Ableitungsfunktion den Verlauf der Steigung der geglätteten Funktion darstellt, können durch Auswertung der Ableitungsfunktion bestimmt werden, wo sich Richtungswechsel im Konturenverlauf der abzutastenden Oberfläche befinden.

Das Verfahren kann des Weiteren ein Bestimmen des kleinsten Minimums und/oder des größten Maximums der Ableitungsfunktion umfassen. Dazu kann bspw. die Ableitungsfunktion ein weiteres Mal differenziert werden und die Nullstellen der so bestimmten zweiten Ableitungsfunktion bestimmt werden. Das Bestimmen des kleinsten Minimums und/oder des größten Maximums der Ableitungsfunktion kann umfassen, Stellen unberücksichtigt zu lassen, an denen die Funktionswerte der Ableitungsfunktion kleiner als ein Schwellwert sind. Dadurch kann vermieden werden, dass bei der Abwesenheit eines eindeutigen Extremums kontinuierlich zufällig verteilte Werte ausgegeben werden.

Das Verfahren kann des Weiteren ein Bestimmen eines Kantenabstandswerts basierend auf dem Argument der Ableitungsfunktion am kleinsten Minimum und/oder am größten Maximum umfassen, wobei der Kantenabstandswert einen Kantenabstand zwischen der Kante in der abzutastenden Oberfläche und der Sensoreinheit repräsentieren kann.

Die Erfindung bezieht sich auch auf ein Verfahren zum Betreiben einer Einbaubohle eines Straßenfertigers umfassend ein Verfahren zum Erfassen einer Kante der vorstehend beschriebenen Art und des Weiteren umfassend Bewegen eines Ausziehteils der Einbaubohle basierend auf dem bestimmten Kantenabstandswert.

Das Verfahren kann des Weiteren ein Einstellen eines Sollwerts für den Kantenabstandswert umfassen. Das Verfahren kann des Weiteren Definieren eines Plausibilitätsfensters um den Sollwert umfassen, wobei der bestimmte Kantenabstandswert beim Bewegen des Ausziehteils berücksichtigt wird, falls er in dem Plausibilitätsfenster liegt und/oder wobei der bestimmte Kantenabstandswert beim Bewegen der des Ausziehteils nicht berücksichtigt wird, falls er außerhalb des Plausibilitätsfensters liegt. Das Verfahren kann Bilden einer Differenz zwischen dem Sollwert und dem bestimmten Kantenabstandswert umfassen. Außerhalb des Plausibilitätsfensters kann die Differenz zwischen dem Sollwert und dem Kantenabstandswert gemäß dem Verfahren als 0 angenommen werden.

Des Weiteren kann die Sensoreinheit einen 2D-LiDAR Sensor umfassen. Das Aussenden von Laserpulsfolgen kann z. B. Aussenden von Laserpulsfolgen im Infrarotspektrum, bspw. kann von infraroten Laserpulsen, umfassen. Das Verfahren kann des Weiteren Erfassen von Reflexionen der Laserpulsfolgen, z. B. Reflexionen im Infrarotspektrum und/oder Reflexionen von infraroten Laserpulsen, insbesondere durch eine Fotodiode umfassen. Die Fotodiode kann als Teil der Sensoreinheit vorgesehen sein. Das Verfahren kann Bestimmen des Abstandswerts basierend auf einer Laufzeitmessung, bspw. durch die Sensoreinheit oder das Kantenerfassungssystem, umfassen.

Das Verfahren kann ein Ablenken der Laserpulsfolgen im Infrarotspektrum und/oder infrarote Laserpulse, in die Vielzahl von Richtungen umfassen, bspw. durch einen rotierenden Spiegel. Der rotierende Spiegel kann als Teil der Sensoreinheit vorgesehen sein. Das Verfahren kann Bestimmen des Winkelwerts basierend auf einer Orientierung des Spiegels umfassen. Die Drehfrequenz des Spiegels kann z. B. zwischen 1 Hz und 100 Hz, insbesondere zwischen 1 Hz und 50 Hz, besonders bevorzugt zwischen 1 Hz und 30 Hz, betragen. Die Drehfrequenz des Spiegels kann bspw. 15 Hz betragen. Das Verfahren kann Auswerten von Messungen im Bereich zwischen -35° und 35° umfassen.
Figur 1 zeigt eine schematische Seitenansicht eines Straßenfertigers mit einem Kantenerfassungssystem.
Figur 2 zeigt eine schematische Draufsicht von oben auf den Straßenfertiger aus Figur 1.
Figur 3 zeigt eine schematische Detailansicht des Straßenfertigers aus Figur 1 und Figur 2 von hinten.
Figur 4 zeigt ein schematisches Diagramm einer interpolierenden Funktion, die auf Basis von Beispielhaften Abstandsmessungen.
Figur 5 zeigt ein schematisches Diagramm einer geglätteten Funktion, die auf Basis der interpolierenden Funktion aus Figur 4 erzeugt wurde.
Figur 6 zeigt ein schematisches Diagramm einer Ableitungsfunktion, die auf Basis der geglätteten Funktion aus Figur 5 erzeugt wurde.
Figur 7 zeigt ein schematisches Diagramm zur Darstellung von Verbindungen verschiedener Komponenten des Straßenfertigers aus Figuren 1 bis 3.

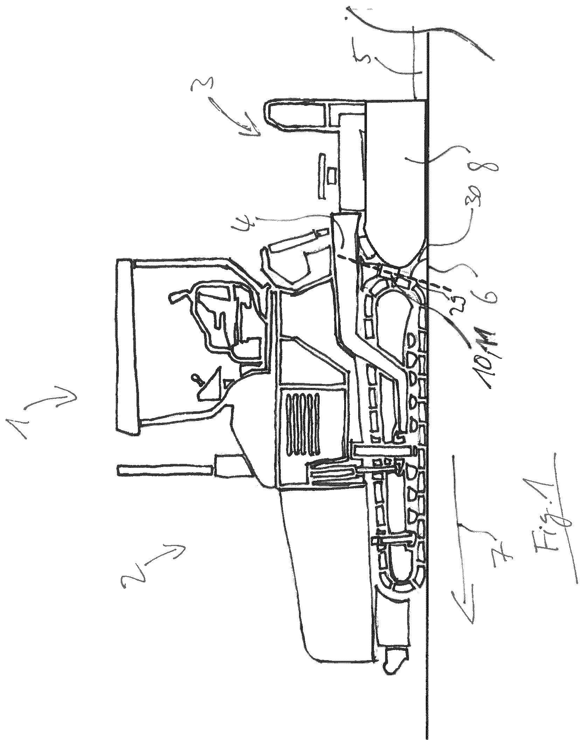

In Figur 1 ist ein Straßenfertiger 1 in einer schematischen Seitenansicht dargestellt. Der Straßenfertiger 1 kann eine Zugmaschine 2 umfassen. Des Weiteren kann der Straßenfertiger eine Einbaubohle 3 umfassen. Die Zugmaschine 2 kann dazu konfiguriert sein, die Einbaubohle 3 zu schleppen. Zu diesem Zweck kann der Straßenfertiger 1 Zugarme 4 umfassen. Der Straßenfertiger 1 kann dazu konfiguriert sein, einen Straßenbelag 5 auf einen Untergrund 6 aufzutragen. Der Straßenfertiger 1 kann sich in einer Fahrtrichtung 7 bewegen.

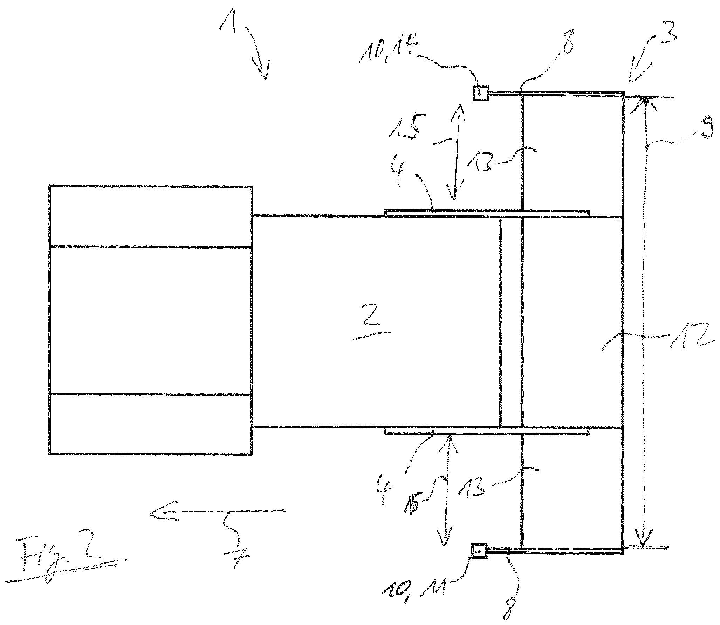

Die Einbaubohle 3 kann Seitenschieber 8 umfassen. Die Seitenschieber 8 können dazu konfiguriert sein, eine Einbaubreite 9 (siehe Figur 2) der Einbaubohle 3 zu begrenzen. Insbesondere können die Seitenschieber 8 dazu konfiguriert sein, die Einbaubreite 9 in einer Richtung quer zur Fahrtrichtung 7 zu begrenzen. Der Straßenfertiger 1 kann des Weiteren ein Kantenerfassungssystem 10 umfassen. Das Kantenerfassungssystem 10 kann eine Sensoreinheit 11 umfassen. Die Sensoreinheit 11 kann an einem der Seitenschieber 8 angeordnet sein.

In Figur 2 ist der Straßenfertiger 1 in einer schematischen Draufsicht von oben dargestellt. Dadurch ist zu erkennen, dass die Einbaubohle 3 eine Grundbohle 12 umfassen kann. Des Weiteren kann die Einbaubohle 3, wie im vorliegenden Ausführungsbeispiel, zwei Ausziehteile 13 umfassen. Die Ausziehteile 13 können relativ zur Grundbohle 12 bewegbar sein, insbesondere in einer Ausziehrichtung 15. Die Ausziehrichtung 15 kann quer, insbesondere orthogonal, zu der-Fahrtrichtung 7 orientiert sein. Durch Bewegen der Ausziehteile 13 kann die Einbaubreite 9 der Einbaubohle 3 einstellbar sein. Ebenfalls in Figur 2 zu erkennen ist, dass das Kantenerfassungssystem 10 eine zweite Sensoreinheit 14 umfassen kann. Wie im Ausführungsbeispiel gezeigt, können die Sensoreinheit 11 und die zweite Sensoreinheit 14 an gegenüberliegenden Ausziehteilen 13, insbesondere an gegenüberliegenden Seitenschiebern 8, der Einbaubohle 3 angeordnet sein.

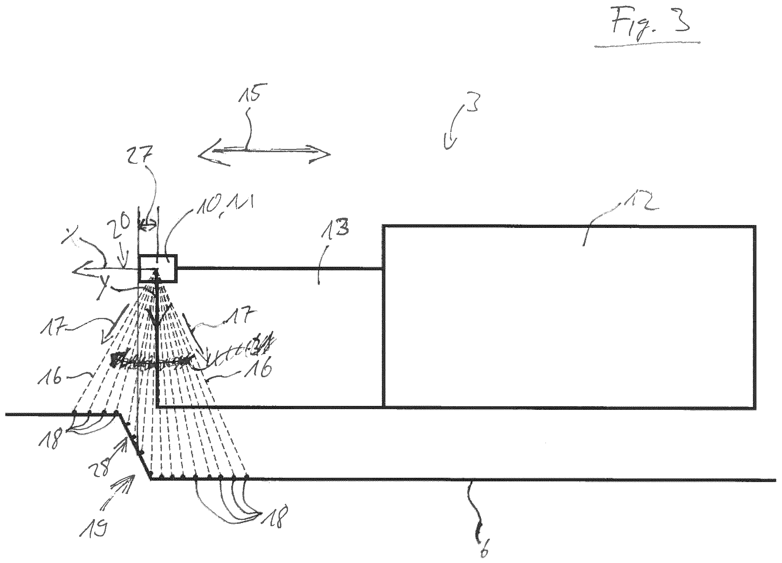

In Figur 3 sind Komponenten der Einbaubohle 3 und des Kantenerfassungssystems 10 detaillierter in einer Perspektive von hinten dargestellt. Es ist zu erkennen, dass die Sensoreinheit 11 dazu konfiguriert sein kann, Laserpulsfolgen 16 auszusenden. Die Sensoreinheit 11 kann dazu konfiguriert sein, Laserpulsfolgen in eine Vielzahl von Richtungen 17 auszusenden. Wie im Ausführungsbeispiel gezeigt, kann die Sensoreinheit 11 dazu konfiguriert sein, die Laserpulsfolgen 16 derart auszusenden, dass sie an einer Vielzahl von Stellen 18 einer abzutastenden Oberfläche 19 reflektiert werden. Wie im Ausführungsbeispiel gezeigt, kann ein Abschnitt des Untergrunds 6 als eine abzutastende Oberfläche 19 angesehen werden.

Die Reflexionen der Laserpulsfolgen 16 können durch die Sensoreinheit 11 erfassbar sein. Beispielsweise können Reflexionen der Laserpulsfolgen 16 durch eine Fotodiode (nicht gezeigt) der Sensoreinheit 11 detektierbar sein. Die Sensoreinheit 11 und/oder das Kantenerfassungssystem 10 können des Weiteren dazu konfiguriert sein, anhand der Laufzeiten der Laserpulsfolgen 16 und deren Reflexionen einen Abstand der jeweiligen Stelle 18 zu der Sensoreinheit 11 zu bestimmen. Basierend auf diesem Abstand und der Richtung 17 der jeweiligen Laserpulsfolge kann die Sensoreinheit 11 und/oder das Kantenerfassungssystem 10 dazu konfiguriert sein, Polarkoordinatensignale zu erzeugen. Jedes Polarkoordinatensignal kann repräsentativ für eine Position der jeweiligen Stelle 18 relativ zu einem Polarkoordinatensystem, dessen Ursprung beispielsweise in der Sensoreinheit 11 liegen kann, sein.

Das Kantenerfassungssystem 10 und/oder die Sensoreinheit 11 können des Weiteren dazu konfiguriert sein, basierend auf den Polarkoordinatensignalen kartesische Koordinatensignale zu erzeugen. Die kartesischen Koordinatensignale können kartesische Koordinaten der jeweiligen Stellen relativ zu einem kartesischen Koordinatensystem 20 repräsentieren. Der Ursprung des kartesischen Koordinatensystems 20 kann in der Sensoreinheit 11 liegen, insbesondere in einem Punkt, in dem die Laserpulsfolgen 16 in die jeweilige Richtung 17 abgelenkt werden.

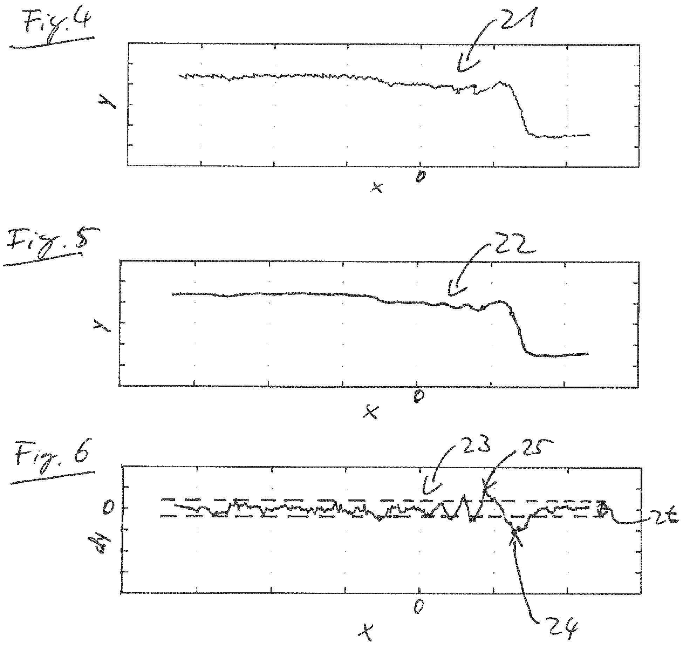

Das Kantenerfassungssystem 10 und/oder die Sensoreinheit 11 können dazu konfiguriert sein, basierend auf den kartesischen Koordinatensignalen eine interpolierende Funktion 21 (siehe Figur 4) zu bestimmen. Ein schematisches Diagramm einer solchen interpolierenden Funktion 21 ist in Figur 4 beispielhaft dargestellt. Das Kantenerfassungssystem 10 und/oder die Sensoreinheit 11 können des Weiteren dazu konfiguriert sein, basierend auf der interpolierenden Funktion 21 eine geglättete Funktion 22 zu bestimmen. Ein schematisches Diagramm solchen geglätteten Funktion 22 ist in Figur 5 beispielhaft dargestellt. Des Weiteren können das Kantenerfassungssystem 10 und/oder die Sensoreinheit 11 dazu konfiguriert sein, basierend auf der geglätteten Funktion 22 eine Ableitungsfunktion 23 zu bestimmen, insbesondere durch Differenzieren der geglätteten Funktion 22. Ein schematisches Diagramm einer solchen Ableitungsfunktion 23 ist beispielhaft in Figur 6 dargestellt.

Des Weiteren können das Kantenerfassungssystem 10 und/oder die Sensoreinheit 11 dazu konfiguriert sein, das kleinste Minimum 24 und/oder das größte Maximum 25 der Ableitungsfunktion 23 zu bestimmen. Basierend auf dem kleinsten Minimum 24 der Ableitungsfunktion 23 und/oder dem größten Maximum 25 der Ableitungsfunktion 23 kann ein Kantenabstandswert 26 bestimmt werden. Insbesondere können das Kantenerfassungssystem 10 und/oder die Sensoreinheit 11 dazu konfiguriert sein, basierend auf dem kleinsten Minimum 24 der Ableitungsfunktion 23 und/oder basierend auf dem größten Maximum 25 der Ableitungsfunktion 23 einen Kantenabstandswert 26 zu bestimmen. Im vorliegenden Ausführungsbeispiel wird das kleinste Minimum 24 der Ableitungsfunktion 23 als Grundlage für die Bestimmung des Kantenabstandswert 26 herangezogen, wie später noch genauer erläutert werden wird. Insbesondere kann ein Argument der Ableitungsfunktion 23 an dem kleinsten Minimum 24 der Ableitungsfunktion 23 als Kantenabstandswert 26 bestimmt werden. Der Kantenabstandswert 26 kann als repräsentativ für einen Kantenabstand 27 (siehe Figur 3) zwischen einer Kante 28 (siehe ebenfalls Figur 3) in der abzutastenden Oberfläche 19 und der Sensoreinheit 11 angesehen werden.

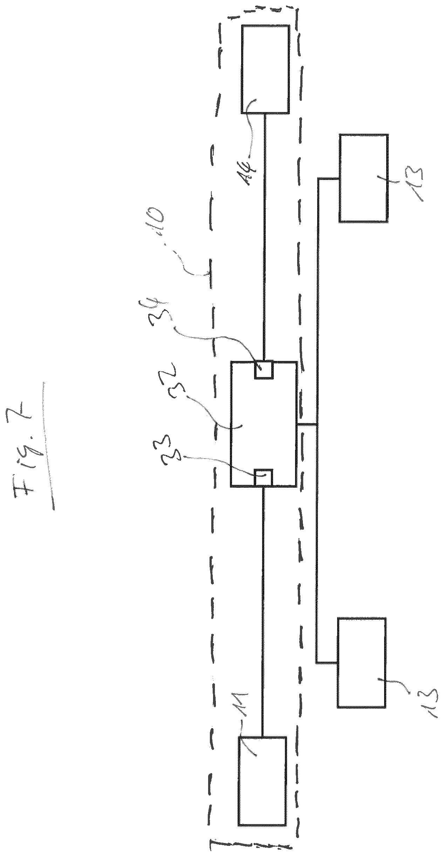

In Figur 7 sind Verbindungen zwischen Komponenten des Kantenerfassungssystems 10 und der Einbaubohle 3 schematisch dargestellt. Es ist zu erkennen, dass das Kantenerfassungssystem 10 eine Steuereinheit 32 umfassen kann. Die Sensoreinheit 11 kann mit einem ersten Anschluss 33 der Steuereinheit 32 verbunden sein. Die zweite Sensoreinheit 14 kann mit einem zweiten Anschluss 34 der Steuereinheit 32 verbunden sein. Die Verbindung zwischen den Sensoreinheiten 11, 14 und der Steuereinheit 32 können beispielsweise als Ethernet ausgeführt sein. Zum Beispiel kann die Sensoreinheit 11 eine feste IP-Adresse aufweisen, anhand derer die Steuereinheit 32 eine Einbauseite der Sensoreinheit 11 erkennen kann. Analog kann die Sensoreinheit 14 eine feste IP-Adresse aufweisen, die von der IP-Adresse der Sensoreinheit 11 verschieden sein kann, und anhand derer die Steuereinheit 32 eine Einbauseite der zweiten Sensoreinheit 14 bestimmen kann. Alternativ oder zusätzlich können der erste Anschluss 33 und der zweite Anschluss 34 jeweils einer Einbauseite zugeordnet sein. Dadurch kann die Steuereinheit 32 dazu konfiguriert sein, anhand des Anschlusses, an welchem die jeweilige Sensoreinheit 11, 14 angeschlossen ist, zu bestimmen, auf welcher Einbauseite die jeweilige Sensoreinheit 11, 14 angeordnet ist.

Im Folgenden soll die Funktionsweise des Kantenerfassungssystems 10 im Zusammenspiel mit dem Straßenfertiger 1 zusammenfassend und beispielhaft anhand der Figuren 1 bis 7 erläutert werden. Die Erläuterung bezieht sich in erster Linie auf die Sensoreinheit 11. Es sollte jedoch klar sein, dass die Erläuterungen auch auf die zweite Sensoreinheit 14 anwendbar sein können.

Die Sensoreinheit 11 kann an dem Ausziehteil 13, insbesondere an dem Seitenschieber 8, der Einbaubohle 3 angeordnet sein. Wie im vorliegenden Ausführungsbeispiel in Figur 1 gezeigt, kann der Sensor so montiert werden, dass eine Ebene 29, in welcher die Vielzahl von Richtungen 17 liegen, in einem Winkel 30 zu dem Untergrund 6 und/oder zu der Fahrtrichtung 7 orientiert ist. Durch Variation des Winkels 30 kann einstellbar sein, wie weit die abzutastende Oberfläche 19 des Untergrunds 6 von einer Hinterkante der Bohle 3 entfernt sein soll. Durch Einstellen einer Montagehöhe der Sensoreinheit 11 kann eine Breite der abzutastenden Oberfläche einstellbar sein.

Wie aus Figur 3 ersichtlich, kann gemäß dem Ausführungsbeispiel die x-Koordinate des kartesischen Koordinatensystem 20, bzw. das Argument der relativ zu diesem Koordinatensystem 20 bestimmten Funktionen, parallel zu der Ausziehrichtung 15 des Ausziehteils 13 orientiert sein. In Richtung Verbreiterung der Einbaubreite 9 (in Figur 3 nach links) kann die x-Koordinate des kartesischen Koordinatensystems 20 positiver werden in Richtung einer Verringerung der Einbaubreite 9 (in Figur 3 nach links) kann die x-Koordinate des kartesischen Koordinatensystems 20 negativer werden. Um den Einsatz gleicher Sensoreinheiten für die Sensoreinheit 11 und die zweite Sensoreinheit 14 zu ermöglichen, kann die x-Koordinate eines Koordinatensystems (nicht dargestellt), welches einen Ursprung in der zweiten Sensoreinheit 14 hat, derart orientiert sein, dass die x-Koordinate in Richtung einer Verkleinerung der Einbaubreite 9 positiver wird.

Wie weiter oben mit Bezug auf Figur 7 erläutert, kann das Kantenerfassungssystem 10 dazu konfiguriert sein, automatisch zu erkennen, auf welcher Seite der Einbaubohle die Sensoreinheit 11 bzw. die zweite Sensoreinheit 14 angeordnet ist. Um die Kantenerkennung zu unterstützen, kann es durch den Bediener einstellbar sein, welche Art von Kante erfasst werden soll, bspw. ob eine nach außen abfallende oder ansteigende Kante erfasst werden soll. Beispielsweise kann beim Einrichten der jeweiligen Sensoreinheit 11, 14 dem Benutzer vom Kantenerfassungssystem 10 basierend auf den ersten Messdaten ein Vorschlag unterbreitet werden. Dieser kann durch den Bediener angenommen oder geändert werden. Abhängig von der Einstellung des Bedieners kann bei der Bestimmung des Kantenabstandswerts 26 nach dem kleinsten Minimum 24 der Ableitungsfonds und 23 oder dem größten Maximum 25 der Ableitungsfunktion 23 gesucht werden.

Befindet sich der Seitenschieber 8 an einer gewünschten Position relativ zu der Kante 28 und ist durch die entsprechende Sensoreinheit 11 einer Kante erkannt worden, kann durch den Bediener der in dieser Situation bestimmte Kantenabstandswert 26 als Sollwert gespeichert werden. Im Falle einer darauffolgenden Abweichung des Kantenabstandswerts 26 von dem Sollwert, beispielsweise durch Lenkbewegungen des Straßenfertigers oder durch den Kantenverlauf, kann sich eine Abweichung einstellen, beispielsweise eine Differenz zwischen dem Sollwert und dem Kantenabstandswert 26. Das entsprechende Ausziehteil 13 kann dann derart gesteuert werden, dass die Abweichung kompensiert wird.

Bei weniger scharf definierten Kanten kann es vorkommen, dass durch die oben erläuterte Art der Bestimmung des Kantenabstandswerts 26 schwankende Kantenabstandswerte 26 bestimmt werden. Unerwünschte Auswirkungen dieses Effekts können durch die Trägheit des Anpassungsverhaltens der Einbaubohle, insbesondere der Ausziehteile 13, reduziert werden. Sollen die Auswirkungen des beschriebenen Effekts weiter reduziert werden, kann ein Verlauf des Kantenabstandswerts 26 durch einen geeigneten Filter, zum Beispiel einen Tiefpassfilter, gedämpft und dadurch geglättet werden.

Des Weiteren kann es vorkommen, dass in der abzutastenden Oberfläche 19 ein weiteres Objekt auftaucht, welches zur Erfassung eines ungeeigneten Kantenabstandswert 26 führt, beispielsweise weil es eine höhere Steigung in der geglätteten Funktion 22 verursacht. Um die Auswirkungen solcher Objekte zu reduzieren, kann der Kantenabstandswert einer Plausibilitätsprüfung unterzogen werden, bevor er bei der Einstellung des Ausziehteils 13 berücksichtigt wird. Zum Beispiel kann um den Sollwert herum ein Plausibilitätsfenster definiert werden. Liegt der Kantenabstandswert 26 innerhalb dieses Plausibilitätsfensters, kann die berechnete Differenz zwischen dem Sollwert und dem Kantenabstandswert 26 beim Einstellen des Ausziehteils 13 berücksichtigt werden. Wenn der Kantenabstandswert 26 außerhalb des Plausibilitätsfensters liegt, kann die Differenz zwischen dem Sollwert und dem Kantenabstandswert 26 als 0 angenommen werden, sodass der als unplausibel bewertete Kantenabstandswert 26 beim Einstellen des Ausziehteils 13 unberücksichtigt bleiben kann.

## Patentansprüche

1. Kantenerfassungssystem (10) für einen Straßenfertiger (1), wobei das Kantenerfassungssystem (10) eine Sensoreinheit (11) umfasst, die dazu konfiguriert ist, Laserpulsfolgen (16) in eine Vielzahl von Richtungen (17) derart auszusenden, dass die Laserpulsfolgen (16) an einer Vielzahl von Stellen (18) einer abzutastenden Oberfläche (19) reflektiert werden, wobei die Sensoreinheit (11) des Weiteren dazu konfiguriert ist, Reflexionen der Laserpulsfolgen (16) zu erfassen und basierend auf den erfassten Reflexionen Polarkoordinatensignale zu erzeugen, die Polarkoordinaten repräsentieren, wobei die Polarkoordinaten einen Abstand und einen zugehörigen Winkel umfassen,
wobei das Kantenerfassungssystem (10) dazu konfiguriert ist, die Polarkoordinatensignale in kartesische Koordinatensignale, die kartesische Koordinaten repräsentieren, zu transformieren und basierend auf den kartesischen Koordinatensignalen eine Position einer Kante (28) in der abzutastenden Oberfläche (19) relativ zu einem kartesischen Koordinatensystem (20) zu bestimmen.

2. Kantenerfassungssystem nach Anspruch 1, wobei das Kantenerfassungssystem (10) dazu konfiguriert ist, basierend auf den kartesischen Koordinatensignalen eine geglättete Funktion (22) zu bestimmen.

3. Kantenerfassungssystem nach Anspruch 2, wobei das Kantenerfassungssystem (10) dazu konfiguriert ist, die geglättete Funktion (22) zu differenzieren und eine Ableitungsfunktion (23) zu bestimmen.

4. Kantenerfassungssystem nach Anspruch 3, wobei das Kantenerfassungssystem (10) dazu konfiguriert ist, das kleinste Minimum (24) und/oder das größte Maximum (25) der Ableitungsfunktion (23) zu bestimmen.

5. Kantenerfassungssystem nach Anspruch 4, wobei das Kantenerfassungssystem (10) dazu konfiguriert ist, basierend auf dem Argument der Ableitungsfunktion (23) am kleinsten Minimum (24) und/oder am größten Maximum (25) einen Kantenabstandswert (26) zu bestimmen, welcher einen Kantenabstand (27) zwischen der Kante (28) in der abzutastenden Oberfläche (19) und der Sensoreinheit (11) repräsentiert.

6. Kantenerfassungssystem nach einem der vorangehenden Ansprüche, wobei das Kantenerfassungssystem (10) des Weiteren eine zweite Sensoreinheit (14) umfasst und das Kantenerfassungssystem (10) dazu konfiguriert ist, die Sensoreinheit (11) und die zweite Sensoreinheit (14) anhand ihrer IP-Adressen zu unterscheiden

7. Einbaubohle (3) für einen Straßenfertiger (1), umfassend ein Kantenerfassungssystem (10) nach einem der vorangehenden Ansprüche.

8. Einbaubohle für einen Straßenfertiger nach Anspruch 7, des Weiteren umfassend mindestens ein Ausziehteil (13), wobei das Bewegen des Ausziehteils (13) basierend auf einer Ausgabe des Kantenerfassungssystems (10), insbesondere einer Ausgabe, welche den Kantenabstandswert (26) repräsentiert, steuerbar ist.

9. Einbaubohle nach Anspruch 8, wobei das Kantenerfassungssystem (10) dazu konfiguriert ist, das Bewegen des Ausziehteils (13) basierend auf einem Sollwert, der einen gewünschten Wert für den Kantenabstandswert (26) repräsentiert, zu steuern.

10. Einbaubohle nach Anspruch 9, wobei das Kantenerfassungssystem (10) dazu konfiguriert ist, ein Plausibilitätsfenster um den Sollwert zu definieren und wobei das Kantenerfassungssystem (10) dazu konfiguriert ist, den bestimmten Kantenabstandswert (26) beim Bewegen des Ausziehteils (13) zu berücksichtigen, falls er in dem Plausibilitätsfenster liegt und/oder den bestimmten Kantenabstandswert (26) beim Bewegen der des Ausziehteils (13) unberücksichtigt zu lassen, falls er außerhalb des Plausibilitätsfensters liegt.

11. Straßenfertiger (1) umfassend ein Kantenerfassungssystem (10) nach einem der Ansprüche 1 bis 6 oder eine Einbaubohle (3) nach einem der Ansprüche 7 bis 10.

12. Straßenfertiger nach Anspruch 13, wobei die Ebene (29) und eine Fahrtrichtung (7) des Straßenfertigers (1) einen Winkel (30) einschließen, der größer als 0° und/oder kleiner als 180°, vorzugsweise größer als 75° und/oder kleiner als 105°, ist.

13. Verfahren zum Erfassen einer Kante (28) durch ein Kantenerfassungssystem (10) für einen Straßenfertiger (1), wobei das Kantenerfassungssystem (10) eine Sensoreinheit (11) umfasst, und wobei das Verfahren umfasst:
Aussenden von Laserpulsfolgen (16) in eine Vielzahl von Richtungen (17) durch eine Sensoreinheit (11), sodass die Laserpulsfolgen (16) an einer Vielzahl von Stellen (18) einer abzutastenden Oberfläche (19) reflektiert werden,
Erfassen von Reflexionen der Laserpulsfolgen (16) durch die Sensoreinheit (11),
Erzeugen von Polarkoordinatensignalen, die Polarkoordinaten repräsentieren, basierend auf den erfassten Reflexionen, wobei die Polarkoordinaten einen Abstand und einen zugehörigen Winkel umfassen,
Transformieren der Polarkoordinatensignale in kartesische Koordinatensignale, die kartesische Koordinaten repräsentieren,
Bestimmen einer Position einer Kante (27) in der abzutastenden Oberfläche (19) relativ zu einem kartesischen Koordinatensystem 20() basierend auf den kartesischen Koordinatensignalen.

14. Verfahren nach Anspruch 13, des Weiteren umfassend Bestimmen einer geglätteten Funktion (22) basierend auf den kartesischen Koordinatensignalen.

15. Verfahren nach Anspruch 14, des Weiteren umfassend Differenzieren der geglätteten Funktion (22) und Bestimmen einer Ableitungsfunktion.

16. Verfahren nach Anspruch 15, des Weiteren umfassend Bestimmen des kleinsten Minimums (24) und/oder des größten Maximums (25) der Ableitungsfunktion (23).

17. Verfahren nach Anspruch 16, des Weiteren umfassend Bestimmen eines Kantenabstandswerts (26) basierend auf dem Argument der Ableitungsfunktion (23) am kleinsten Minimum (24) und/oder am größten Maximum (25), wobei der Kantenabstandswert (26) einen Kantenabstand (27) zwischen der Kante (28) in der abzutastenden Oberfläche (19) und der Sensoreinheit (11) repräsentiert.

18. Verfahren zum Betreiben einer Einbaubohle (3) eines Straßenfertigers (1) umfassend ein Verfahren zum Erfassen einer Kante (28) nach einem der Ansprüche 13 bis 17 und des Weiteren umfassend Bewegen eines Ausziehteils (13) der Einbaubohle (3) basierend auf dem bestimmten Kantenabstandswert (26).

19. Verfahren nach Anspruch 18, des Weiteren umfassend Einstellen eines Sollwerts für den Kantenabstandswert (26).

20. Verfahren nach Anspruch 19, des Weiteren umfassend Definieren eines Plausibilitätsfensters um den Sollwert, wobei der bestimmte Kantenabstandswert (26) beim Bewegen des Ausziehteils (13) berücksichtigt wird, falls er in dem Plausibilitätsfenster liegt und/oder wobei der bestimmte Kantenabstandswert (26) beim Bewegen der des Ausziehteils (13) nicht berücksichtigt wird, falls er außerhalb des Plausibilitätsfensters liegt.
